(19) Europäisches Patentamt
European Patent Office
Office européen des brevets

(11) Veröffentlichungsnummer : **0 020 913**
**B1**

# (12) EUROPÄISCHE PATENTSCHRIFT

(45) Veröffentlichungstag der Patentschrift : **09.03.83**

(51) Int. Cl.[3] : **C 08 F279/02**, C 08 F 2/06, C 08 F 4/64 // (C08F279/02, 210/00)

(21) Anmeldenummer : **80102093.4**

(22) Anmeldetag : **18.04.80**

(54) **Polybutadien/Alpha-Olefin-Copolymere und ihre Herstellung.**

(30) Priorität : **28.04.79 DE 2917403**

(43) Veröffentlichungstag der Anmeldung : **07.01.81 Patentblatt 81/01**

(45) Bekanntmachung des Hinweises auf die Patenterteilung : **09.03.83 Patentblatt 83/10**

(84) Benannte Vertragsstaaten : **DE FR GB IT**

(56) Entgegenhaltungen :
**DE B 1 106 079**
**US A 3 953 542**

**CHEMICAL ABSTRACTS, Band 73, Nr. 22, 30. November 1970, Seite 13, Zusammenfassung Nr. 110302 g, Columbus, Ohio, US.**

(73) Patentinhaber : **BAYER AG**
**Zentralbereich Patente, Marken und Lizenzen**
**D-5090 Leverkusen 1, Bayerwerk (DE)**

(72) Erfinder : **Arlt, Klaus, Dr.**
**Anton-Aulke-Ring 9**
**D-4401 Senden/Münster (DE)**
Erfinder : **Grigo, Ulrich, Dr.**
**Steinstrasse 161**
**D-4150 Krefeld (DE)**
Erfinder : **Binsack, Rudolf, Dr.**
**Bethelstrasse 41**
**D-4150 Krefeld (DE)**

**EP 0 020 913 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Polybutadien/α-Olefin-Copolymere und ihre Herstellung

Gegenstand der Erfindung sind Copolymere bzw. Pfropfcopolymere aus 5-95 Gew.-% α-Olefinen der Formel A

$$CH_2=CH-R^1 \quad (A)$$

worin $R^1$ Wasserstoff, Alkyl mit 1-16 C-Atomen oder Phenyl bedeutet und 5-95 Gew.-% unverzweigten, verzweigten oder vernetzten Polyenen B, wobei das Molekulargewicht und die Mikrostruktur des Polyens in weiten Grenzen variieren können. Diese Polymerisate werden durch das nachstehende Herstellverfahren erhalten.

Ein weiterer Gegenstand der Erfindung ist ein Verfahren zur Herstellung von Copolymeren bzw. Pfropfcopolymeren aus α-Olefinen der Formel A mit Polyenen B, wobei man ein oder mehrere α-Olefine A in Gegenwart einer Lösung eines Polyens B in einem inerten Lösungsmittel oder eines in einem inerten Lösungsmittel gequollenen Gels des Polyens B mit eime festen katalytischen Komplex auf Basis $TiCl_3$ und Aluminiumverbindungen der Formel C

$$Al\ R^2{}_nX_{3-n} \quad (C)$$

worin $R^2 = C_1$-$C_{18}$-Alkyl, X = Halogen, bevorzugt Chlor und $0 < n \leq 3$ ist, in gleichen Suspensionsmittel umsetzt, das dadurch gekennzeichnet ist, daß man am Ende der Polymerisation durch Hinzugabe von Dihalogenaluminiumalkylen der Formel D

$$X_2\ AlR^3 \quad (D)$$

worin R = $C_1$-$C_{18}$-Alkyl und X = Halogen, bevorzugt Chlor ist, bei Temperaturen von 40-80 °C die endgültige Verknüpfung zwischen der Komponente A und der Komponente B herstellt, wobei man, um die Geschwindigkeit der Verknüpfung zwischen A und B zu beschleunigen, vor der Hinzugabe der Komponente D oder gleichzeitig mit dieser ein Komponentengemisch E, bestehend aus einer Benzolhalogenidverbindung, besonders Benzylbromid und Trialkylphosphinverbindung, besonders Tri-n-butylphosphin, im Molverhältnis 1 : 1 zugeben kann, wobei das Molverhältnis E : D, 1 : 10 bis 1 : 50 beträgt.

α-Olefin/Polyen (Butadien- bzw. Isopren-Copolymere) und Verfahren zu ihrer Herstellung mittels Ziegler-Natta-Katalysatoren sind bekannt. Die Verfahren führen jedoch entweder zu streng alternierend aufgebauten Copolymeren mit elastomerem Charakter bzw. zu Copolymeren mit einem geringen Gehalt an Dienkomponente. Diese Produkte sind durch Schwefelvulkanisation vernetzbar. Da eine peroxidische Vernetzung der Poly-α-Olefine im allgemeinen nicht möglich ist, bietet dieses Produkt gewisse Vorteile.

So beschreibt die DE-A 2 706 118 ein Verfahren zur Herstellung von streng alternierenden Copolymeren aus trans-1,4-Butadien- und Propyleneinheiten durch Lösungspolymerisation von Butadien und Propylen unter Verwendung von Vanadyldialkoxyhalogeniden als Katalysatoren. Die Produkte weisen für den Einsatz als Synthesekautschuke genügend hohe Molekulargewichte auf.

Journal of Polymer Sci., Polymer Chemistry Edition, Vol. 10, 3 027-3 037 (1972), beschreibt die Herstellung von Ethylen/Butadien-Copolymeren mit $TiCl_4/R_3Al$-Systemen. Das Verfahren ermöglicht die Steuerung der Copolymerzusammensetzung und des Monomerverhältnisses ; so führt ein Butadien/Ethylenverhältnis von 4 : 1 zu streng alternierenden Copolymeren. Die Copolymeren enthalten kleine Anteile an 1,4-cis-verknüpften Einheiten des Butadiens.

Ethylen/Butadien-Copolymere mit hohen Molekulargewichten, linearer Struktur und geringem Butadiengehalt, hergestellt mit modifizierten Vanadiumkatalysatoren, werden in Makromol. Chem. *179*, 2 173 - 2 185 beschrieben. Die Produkte mit 1-5 Mol-% Butadien besitzen die typische Röntgenkristallinität des Polyethylens mit kleinen Variationen der strukturellen Parameter. Sie schmelzen bei 132 °C und sind mit Schwefel vernetzbar.

Makromol. Chem. *79*, 161-169 (1964) beschreibt mit Vanadiumverbindungen, aluminiumorganischen Komponenten und schwachen Lewis-Basen herstellbare kristalline Ethylen/Butadien-Copolymere mit Sequenzen aus Ethylen- und streng alternierenden Ethylen/Butadien-Einheiten.

Die DE-B 1 106 079 beschreibt Mischpolymerisate eines Polyens mit einem α-Olefin, die durch Ziegler-Katalysatoren hergestellt wurden. Auch derartige Produkte sind weder blockartig noch pfropfartig aufgebaut.

Polyen/Poly-α-Olefin-Copolymere mit sequenzartiger Struktur aus Polyeneinheiten und α-Olefineinheiten oder pfropfartige Copolymere sind nicht beschrieben. Nur derartig aufgebaute Copolymere zeigen jedoch ein Eigenschaftsbild, welches typische Thermoplasteigenschaften mit typischen Elastomereigenschaften kombiniert, wobei die separaten Phasen durch chemische Bindungen aneinander gekoppelt sind. Ein solches Verhalten zeigen z. B. die linear aufgebauten Styrol/Butadien/Styrol-Blockcopolymeren.

Man erhält also erfindungsgemäß unter Verwendung üblicher Ziegler-Natta-Katalysatoren auf Basis $TiCl_3$ und aluminiumorganischer Verbindungen blockartig oder pfropfartig aufgebaute Polyen/Poly-α-Olefin-Copolymere, wenn man in Gegenwart von in inerten Lösungsmitteln gelösten oder angequollenen Polyenen polymerisiert und vor der Desaktivierung des Katalysators Dihalogenaluminiumverbindungen der Formel D oder Gemische aus D und Benzylchlorid/Tri-n-butylphosphin E zufügt, wobei die Komponenten A und B verknüpft werden. Die spezifische Ausbeute an Homo-Poly- α-Olefin (gemessen in g Polymer/g Katalysator . h . atm) bleibt dabei praktisch unverändert.

Erfindungsgemäß bevorzugte Polyene B sind lineare, verzweigte oder schwachvernetzte, noch quellbare Polybutadiene, Polyisoprene, Poly-2,3-dimethylbutadiene oder Poly-hexadien-2,4. Ihre Molekulargewichte sind an sich unerheblich, aus praktischen Gründen werden Polyene mit Molekulargewichten von ca. $10^5$ bis $10^6$ bevorzugt. Ihre Mikrostruktur ist ebenfalls unerheblich, als vorteilhaft erwiesen sich Polyene mit mindestens ca. 10-20 % 1,2-Struktur.

Geeignete α-Olefine A sind z. B. Ethylen, Propylen, Buten-1, Penten-1, Hexen-1, Undecen-1,4-Methylpenten-1 und Gemische daraus.

Die inerten Lösungsmittel für die Komponente B sind zugleich das Suspensionsmedium für die Polymerisation. Geeignete Lösungsmittel sind aliphatische und cycloaliphatische Kohlenwasserstoffe mit 5-18 C-Atomen, chlorierte Kohlenwasserstoffe und Aromaten. Z. B. eignen sich Pentan, Hexan, Heptan, Octan, Decan, Cyclohexan, Methylcyclohexan, Benzol, Toluol, Xylol, Ethylbenzol, Benzylchlorid, Dichlorethan. Besonders geeignet sind Isooctan und Isooctan/Toluol-Gemische im Gewichtsverhältnis 1 : 1, wobei letztere schwach vernetztes Polyen B stärker zu quellen vermögen als reines Isooctan.

Als Katalysatorbestandteil wird ein fester katalytischer Komplex auf Basis $TiCl_3$, kurz $TiCl_3$-Komplex, benutzt. Dies ist ein Produkt der Formel

$$TiCl_3x(AlR_{n'}X_{2-n'})_x(F)_Y$$

worin

R ein Kohlenwasserstoffrest mit 1-18 C-Atomen,
X Halogen (Chlor),
n' eine Zahl, so daß $0 \leq n' \leq 2$,
F ein komplexbildendes Mittel,
x eine Zahl kleiner 0,3,
Y eine Zahl größer 0,001

ist.

Die Produkte und ihre Herstellung sind in der DE-A 22 13 086 beschrieben.

Es können auch $TiCl_3$-Katalysatoren auf einem festen Träger auf Basis von wasserfreien Magnesiumchloriden eingesetzt werden, wie sie in der DE-A 28 39 136 beschrieben sind.

Geeignete Aluminiumverbindungen sind z. B. Triethylaluminium, Triisopropylaluminium, Tri-n-butylaluminium und partiell halogenierte Aluminiumverbindungen wie Ethylaluminiumdichlorid, Diethylaluminiumchlorid, Diethylaluminiumbromid, Diethylaluminiumjodid. Besonders vorteilhaft ist Diethylaluminiumchlorid.

Für die Verknüpfungsreaktion der Komponente A und B geeignete Dihalogenaluminiumalkyle der Formel D entsprechen den Aluminiumverbindungen C, besonders geeignet ist Ethylaluminiumdichlorid.

Die Polymerisation kann bei Temperaturen von 20 bis 100 °C, vorzugsweise 60 bis 90 °C, und bei Partialdrukken der Monomeren von 1-30 bar durchgeführt werden, wobei der Druck durch Nachdrücken der Monomere konstant gehalten wird. Der feste katalytische Komplex auf Basis $TiCl_3$ kann in einer Konzentration von 0,1-400 m Mol/l, vorzugsweise 1-50 m Mol/l verwendet werden. Cokatalysatoren sind die Aluminiumverbindungen der Formel C. Im allgemeinen beträgt das Molverhältnis Aluminiumverbindung : $TiCl_3$-Komplex = 1 : 1 bis 100 : 1, besonders vorteilhaft 8 : 1 bis 12 : 1.

Zur Durchführung der Polymerisation können Katalysator und Cokatalysator vorteilhaft zunächst in etwa dem zehnten Teil des gesamten Lösungsmittels in einem dem Reaktionsgefäß vorgeschalteten Gefäß vereinigt werden ; anschließend wird die erhaltene Suspension dem restlichen Lösungsmittel zugefügt, in dem sich die gelöste Komponente B befindet.

Das Gewichtsverhältnis Polyen B/Poly-α-Olefin A kann zwischen 5 : 95 und 95 : 5 betragen. Zur Regulierung des Molekulargewichtes der Komponente A kann Wasserstoff zugesetzt werden.

Nach der Polymerisation werden durch Hinzufügen des Dihalogenaluminiumalkyls D bei 40-80 °C, bevorzugt zwischen 50 und 60 °C, die Komponenten A und B verknüpft. Das Gewichtsverhältnis A+B : D kann 5 : 1 bis 500 : 1, bevorzugt 50 : 1 bis 100 : 1 sein. Die Reaktionszeit ist etwa 1-3 Stunden. Die Verknüpfungsgeschwindigkeit zwischen A und B läßt sich erhöhen, wenn man vor der Komponente D ein Gemisch aus Benzylchlorid/Tri-n-butylphosphin E im Molverhältnis 1 : 1 zu der Polymersuspension gibt. Das Molverhältnis E : D beträgt dabei 1 : 10 bis 1 : 50, bevorzugt 1 : 15 bis 1 : 25.

Nach der Verknüpfungsreaktion wird der katalytische Komplex durch Zugabe von Alkohol bzw. Alkoholgemisch desaktiviert.

Die erfindungsgemäßen Produkte besitzen keine nennenswerten Gelanteile. Aus der Fraktionierung in 3 Teile (s. beigefügte Tabelle)

I. unlöslich in siedendem Xylol = vernetzte Anteile
II. unlöslich in Xylol bei Raumtemperatur = Poly-α-Olefin-reiche Anteile
III. löslich in Xylol bei Raumtemperatur = polyenreiche Anteile

und aus der Zusammensetzung der Ausgangsverbindung im Zusammenhang mit Fraktionierungsergebnissen an physikalischen Gemischen aus A und B und der IR-Untersuchung der Fraktionen kann auf die Copolymer-Zusammensetzung geschlossen werden.

Legierungen von Homo-Poly-α-Olefinen mit den beschriebenen Copolymeren weisen eine höhere Zähigkeit und verbesserte elastische Eigenschaften auf als die entsprechenden reinen Polymeren.

Die Erfindung wird durch folgende Beispiele erläutert :

Beispiel 1

Ein 2-Ltr.-Glasautoklav wurde mehrfach evakuiert und mit Argon gefüllt. Es wurden 25 g eines Polybutadiens (mit Kobalt-Katalysator hergestellt ; ca. 98 % 1,4-cis ; Mooney-Viskosität ML-4 (100 °C) ca. 48, gelöst in 1 500 ml 1 : 1 Isooctan/Toluolgemisches, vorgelegt und anschließend werden in einem dem Autoklaven vorgeschalteten Reaktionsgefäß 0,5 g $TiCl_3$-Komplex = 3,24 mMol (vergl. deutsche Anmeldung P 29 01 646.4) mit 40 ml einer 20 %igen Lösung von Diethylaluminiumchlorid in 50 ml Isooctan kontaktiert und die so erhaltene Suspension in den Reaktionsautoklaven gepumpt. Nach Erreichen der Polymerisationstemperatur von 70 °C wird 1 Stunde Propylen durch die Suspension geleitet. Am Ende der Polymerisation wird die Suspension mit einer Mischung aus 1,48 ml = 6 mMol Tri-n-butylphosphin und 0,71 ml = 6 mMol Benzylbromid versetzt. Nach Hinzufügen von 10 ml = 97 mMol Dichlorethylaluminium wird 1 Stunde nachgerührt, mit 0,1 % 2,6-Di-t-butylphenol stabilisiert und mit einem Überschuß eines Methanol/Propanol-Gemisches versetzt. Nach dem Trocknen im Hochvakuum bei 60 °C werden 33 g Copolymerisat erhalten, dessen Zusammensetzung sich aus der Tabelle ergibt.

Vergleichsbeispiel

Es wird entsprechend Beispiel 1 verfahren, mit der Ausnahme, daß die Verknüpfungsreaktion zwischen dem noch nicht desaktivierten Polypropylen und dem vorgelegten Polybutadien unterbleibt.

Nach der Alkoholbehandlung und Trocknen im Hochvakuum bei 60 °C werden 37 g Produkt erhalten, dessen Zusammensetzung durch Fraktionierung in die Bestandteile II und III und deren analytische Untersuchung auf eine rein physikalische Mischung der Komponenten schließen läßt.

Beispiel 2

Es werden 25 g eines Polybutadiens (45 % 1,2-Gehalt, Mooney-Viskosität ML-4 (100 °C) ca. 47) in 1 000 ml eines Isooctan/Toluol-Gemisches gelöst und im Reaktionsautoklaven vorgelegt. Anschließend wird entsprechend Beispiel 1 die Katalysatorkomponente zugepumpt. Nach Erreichen der Polymerisationstemperatur von 70 °C wird 1 Std. bei 5 bar Propylendruch polymerisiert, wobei der Druck durch ständiges Nachdrükken von Propylen konstant gehalten wird. Am Ende der Polymerisation wird nicht umgesetztes Propylen abgeblasen und mit Tri-n-butylphosphin/Benzylbromid-Dichlorethylaluminium die Verknüpfungsreaktion zwischen Polypropylen und Polybutadien in der im Beispiel 1 beschriebenen Art und Weise durchgeführt. Nach der weiteren Aufarbeitung entsprechend Beispiel 1 werden 195 g Copolymerisat erhalten, dessen Zusammensetzung die Tabelle wiedergibt.

Beispiel 3

25 g Polybutadienkautschuk mit den Kenngrößen entsprechend Beispiel 2 werden in 750 ml Isooctan mit 0,5 Dibenzoylperoxid bei 92 °C 3 Stunden verrührt. Das resultierende vernetzte Produkt besitzt einen in siedendem Xylol unlöslichen Anteil von 98 %. Nach Hinzugabe von 750 ml Toluol wird sowohl die Propylenpolymerisation als auch die Verknüpfungsreaktion wie in Beispiel 1 beschrieben, durchgeführt. Man erhält 150 g Copolymerisat mit einem höheren Gelanteil, als dem Gehalt der Produkte aus vernetztem Polybutadien entspricht. Daraus kann auf eine Pfropfung von Polypropylen auf vernetztem Polybutadien geschlossen werden.

(Siehe die Tabelle, Seite 5)

Zusammensetzung von Polypropylen/Polybutadien-Copolymerisaten bzw. Pfropfcopolymerisaten durch Fraktionierung (3 g Produkt/1 000 ml Xylol).

Die Produkte wurden in 3 Teile fraktioniert :

I unlöslich in siedendem Xylol = vernetzte Anteile
II unlöslich in Xylol bei Raumtemperatur = Anteile mit überwiegend Polypropylen (PP)
III löslich in Xylol bei Raumtemperatur = Anteile mit überwiegend Polybutadien (PB)

| Beispiel | Brutto-Zusammensetzung des Copolymeren PB | PP | I (Gelanteil %) | II (PP-reich %) | III (PB-reich %) |
|---|---|---|---|---|---|
| Vergleich | 67,56 | 32,44 | — | 33 | 68 |
| 1 | 75,80 | 24,20 | 0,8 | 8,2 | 91,2 |
| 2 | 12,82 | 87,18 | 0,2 | 97 | 2 |
| 3 | 16,66 | 83,34 | — | 94 | 5,7 |

## Ansprüche

1. Sequenzartige Copolymere bzw. Pfropfcopolymere aus 5-95 Gew.-% α-Olefinen der Formel A

$$CH_2=\underset{R^1}{\underset{|}{C}}H \qquad (A)$$

worin $R^1$ Wasserstoff, Alkyl mit 1-16 C-Atomen oder Phenyl bedeutet, und 5-95 Gew.-% unverzweigten, verzweigten oder vernetzten Polyenen, erhalten durch Umsetzung eines oder mehrerer α-Olefine A mit einer Lösung eines Polyens B in einem inerten Lösungsmittel oder eines in einem inerten Lösungsmittel gequollenen Gels des Polyens B in Gegenwart eines festen katalysatischen Komplexes auf Basis $TiCl_3$ und Aluminiumverbindungen der Formel C

$$Al\ R^2_nX_{3-n} \qquad (C)$$

worin $R^2 = C_1$-$C_{18}$-Alkyl, X = Halogen, bevorzugt Chlor und $0 < n \leqslant 3$ ist,
und sich anschließender Verknüpfung der Komponente A und der Komponente B durch am Ende der Polymerisation erfolgenden Zugabe von Dihalogenaluminiumalkylen der Formel D

$$X_2\ AlR^3 \qquad (D)$$

worin $R^3 = C_1$-$C_{18}$-Alkyl und X = Halogen, bevorzugt Chlor ist,
bei Temperaturen von 40-80 °C wobei man, um die Geschwindigkeit der Verknüpfung zwischen A und B zu beschleunigen, vor der Hinzugabe der Komponente D oder gleichzeitig mit dieser ein Komponentengemisch E, bestehend aus einer Benzolhalogenidverbindung, besonders Benzylbromid und Trialkylphosphinverbindung, besonders Tri-n-butylphosphin, im Molverhältnis 1 : 1 zugeben kann, wobei das Molverhältnis E : D, 1 : 10 bis 1 : 50 beträgt.

2. Verfahren zur Herstellung der Polymerisate gemäß Anspruch 1, wobei man ein oder mehrere α-Olefine A in Gegenwart einer Lösung eines Polyens B in einem inerten Lösungsmittel oder eines in dem gleichen inerten Lösungsmittel gequollenen Gels des Polyens B mit einem festen katalytischen Komplex auf Basis $TiCl_3$ und Aluminiumverbindungen der Formel C

$$Al\ R^2_nX_{3-n} \qquad (C)$$

worin $R^2 = C_1$-$C_{18}$-Alkyl, X = Halogen, bevorzugt Chlor und $0 < n \leqslant 3$ ist,
in Suspension umsetzt, dadurch gekennzeichnet ist, daß man am Ende der Polymerisation durch Hinzugabe von Dihalogenaluminiumalkylen der Formel D

$$X_2\ AlR^3 \qquad (D)$$

worin $R^3 = C_1$-$C_{18}$-Alkyl und X = Halogen, bevorzugt Chlor ist,
bei Temperaturen von 40-80 °C die endgültige Verknüpfung zwischen der Komponente A und der Komponente B herstellt, wobei man, um die Geschwindigkeit der Verknüpfung zwischen A und B zu beschleunigen, vor der Hinzugabe der Komponente D oder gleichartig mit dieser Komponentengemisch E, bestehend aus einer Benzolhalogenidverbindung, besonders Benzylbromid und Trialkylphosphinverbindung, besonders Tri-n-butylphosphin, im Molverhältnis 1 : 1 zugeben kann, wobei das Molverhältnis E : D, 1 : 10 bis 1 : 50 beträgt.

**Claims**

1. Sequence copolymers or graft copolymers of 5-95 % by weight of α-olefins of the formula A

$$CH_2=\underset{\substack{|\\R^1}}{CH} \qquad (A)$$

wherein $R^1$ denotes hydrogen, alkyl with 1-16 C atoms or phenyl, and 5-95 % by weight of straight-chain, branch-chain or cross-linked polyenes, obtained by reacting one or more α-olefins A with a solution of a polyene B in an inert solvent or of a gel of the polyene B swelled in an inert solvent in the presence of a solid catalytic complex based on $TiCl_3$ and aluminium compounds of the formula C

$$Al\ R^2_nX_{3-n} \qquad (C)$$

wherein $R^2 = C_1$-$C_{18}$ alkyl, X = halogen, preferably chlorine, and $0 < n \leq 3$,
and subsequently linking component A and component B by the addition, taking place at the end of the polymerisation, of a dihalogen aluminium alkylene of the formula D

$$X_2\ AlR^3 \qquad (D)$$

wherein $R^3 = C_1$-$C_{18}$ alkyl and X = halogen, preferably chlorine,
at temperatures of 40-80 °C, it being possible to add, prior to the addition of component D or simultaneously with this, a component mixture E, consisting of a benzene halide compound, in particular benzyl bromide, and a trialkylphosphine compound, in particular tri-n-butylphosphine, in a molar ratio of 1 : 1, the molar ratio E : D being 1 : 10 to 1 : 50, in order to accelerate the linkage between A and B.

2. Process for the preparation of the polymers according to Claim 1, wherein one or more α-olefins A are reacted with a solid catalytic complex based on $TiCl_3$ and aluminium compounds of the formula C

$$Al\ R^2_nX_{3-n} \qquad (C)$$

wherein $R^2 = C_1$-$C_{18}$ alkyl, X = halogen, preferably chlorine, and $0 < n \leq 3$,
in suspension, in the presence of a solution of a polyene B in an inert solvent or of a gel of the polyene B swelled in the same inert solvent, which is characterised in that the final linkage between component A and component B is produced at the end of the polymerisation by the addition of a dihalogen aluminium alkylene of the formula D

$$X_2\ AlR^3 \qquad (D)$$

wherein $R^3 = C_1$-$C_{18}$ alkyl and X = halogen, preferably chlorine,
at temperatures of 40-80 °C, it being possible to add, prior to the addition of component D or similarly with this, a component mixture E, consisting of a benzene halide compound, in particular benzyl bromide, and a trialkylphosphine compound, in particular tri-n-butylphosphine, in a molar ratio of 1 : 1, the molar ratio E : D being 1 : 10 to 1 : 50, in order to accelerate the linkage between A and B.

**Revendications**

1. Copolymères séquencés ou copolymères greffés de 5 à 95 % en poids d'α-oléfines de formule A

$$CH_2=\underset{\substack{|\\R^1}}{CH} \qquad (A)$$

dans laquelle $R^1$ représente l'hydrogène, un groupe alkyle en $C_1$-$C_{16}$ ou phényle et 5 à 95 % en poids de polyènes non ramifiés, ramifiés ou réticulés, obtenus par réaction d'une ou plusieurs α-oléfines A avec une solution d'un polyène B dans un solvant inerte ou d'un gel du polyène B gonflé dans un solvant inerte en présence d'un complexe catalytique solide à base de $TiCl_3$ et de composés d'aluminium de formule C

$$Al\ R^2_nX_{3-n} \qquad (C)$$

dans laquelle $R^2$ = alkyle en $C_1$-$C_{18}$, X = halogène, de préférence le chlore et $0 < n \leqslant 3$, et liaison ultérieure du composant A et du composant B par addition, à la fin de la polymérisation, de dihalogénoaluminiumalkyles de formule D

$$X_2\ AlR^3 \qquad (D)$$

dans laquelle $R^3$ = alkyle en $C_1$-$C_{18}$ et X = halogène, de préférence le chlore, à des températures de 40-80 °C, réaction dans laquelle, pour accélérer la vitesse de la liaison entre A et B, on peut ajouter avant l'addition du composant D ou simultanément avec celle-ci un mélange de composants E consistant en un composé d'halogénure benzénique, en particulier le bromure de benzyle, et d'une trialkylphosphine, en particulier la tri-n-butylphosphine, dans un rapport molaire de 1 : 1, le rapport molaire E : D étant de 1 : 10 à 1 : 50.

2. Procédé pour la production des polymères selon la revendication 1, dans lequel on fait réagir en suspension une ou plusieurs α-oléfines A en présence d'une solution d'un polyène B dans un solvant inerte ou d'un gel du polyène B gonflé dans le même solvant inerte avec un complexe catalytique solide à base de $TiCl_3$ et de composés d'aluminium de formule C

$$Al\ R^2_nX_{3-n} \qquad (C)$$

dans laquelle $R^2$ = alkyle en $C_1$-$C_{18}$, X = halogène, de préférence le chlore et $0 < n \leqslant 3$, caractérisé en ce que l'on produit la liaison définitive entre le composant A et le composant B à la fin de la polymérisation par addition de dihalogénoaluminiumalkyles de formule D

$$X_2\ AlR^3 \qquad (D)$$

dans laquelle $R^3$ = alkyle en $C_1$-$C_{18}$ et X est un halogène, de préférence le chlore, à des températures de 40-80 °C, réaction dans laquelle, pour accélérer la vitesse de la liaison entre A et B, on peut ajouter, avant l'addition du composant D ou de manière équivalente avec celle-ci, un mélange de composants E consistant en un halogénure benzénique, en particulier le bromure de benzyle, et une trialkylphosphine, en particulier la tri-n-butylphosphine, dans un rapport molaire de 1 : 1, le rapport molaire E : D étant de 1 : 10 à 1 : 50.